(19) Europäisches Patentamt
European Patent Office
Office européen des brevets

(11) Publication number: 0 211 272
A2

(12) # EUROPEAN PATENT APPLICATION

(21) Application number: 86109493.6

(22) Date of filing: 11.07.86

(51) Int. Cl.[4]: C 09 B 29/01
C 09 B 29/22, C 09 B 33/12

(30) Priority: 01.08.85 JP 168540/85

(43) Date of publication of application:
25.02.87 Bulletin 87/9

(84) Designated Contracting States:
CH DE FR GB IT LI

(71) Applicant: DAINICHISEIKA COLOR & CHEMICALS MFG. CO. LTD.
7-6 Bakuro-cho 1-chome Nihonbashi
Chuo-ku Tokyo 103(JP)

(72) Inventor: Yamamiya, Shiro
3-24-1, Fujimidai Nerima-ku
Tokyo(JP)

(72) Inventor: Horiguchi, Shojiro
2135, Aza-Onishi Katayanagi
Omiya-shi Saitama-ken(JP)

(72) Inventor: Ohira, Shozo
2-6-20, Sakae-cho
Hoya-shi Tokyo(JP)

(72) Inventor: Abe, Yoshio
5-11-32, Higashi-Iwatuki
Iwatuki-shi Saitama-ken(JP)

(72) Inventor: Zama, Yoshiyuki
4-2-30, Saginumadai
Narashino-shi Tiba-ken(JP)

(72) Inventor: Saikatu, Hiroaki
2-176-1, Akayama-cho
Koshigaya-shi Saitama-ken(JP)

(74) Representative: Wächtershäuser, Günter, Dr.
Tal 29
D-8000 München 2(DE)

(54) **AZO compound and colored composition containing same.**

(57) The present invention provides an azo compound represented by the following general formula and a colored or coloring composition containing the azo compound:

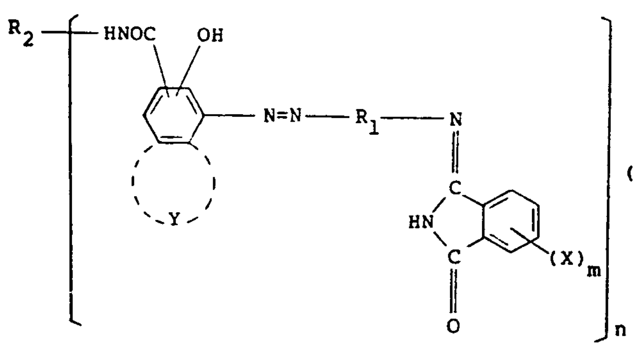

(I)

wherein X means a hydrogen or halogen atom, m stands for an integer of 1 - 4, $R_1$ denotes a substituted or unsubstituted phenylene, biphenylene or naphthylene group, n is 1 or 2, $R_2$ means a substituted or unsubstituted phenyl, biphenyl or naphthyl group when n is 1 or a substituted or unsubstituted phenylene biphenylene or naphthylene group when n is 2, and Y is a moiety forming a benzocarbazole ring.

EP 0 211 272 A2

Croydon Printing Company Ltd.

TITLE OF THE INVENTION

# AZO COMPOUND AND COLORED COMPOSITION CONTAINING SAME

## BACKGROUND OF THE INVENTION

### 1) Field of the Invention:

This invention relates to an azo compound and a colored composition containing the azo compound, and more specifically to an infrared reflective colored composition having higher infrared reflective property compared with materials colored or pigmented by a conventional black pigment such as carbon black or aniline black and to a colored composition having infrared reflection characteristics similar to green plants and hence being useful as a camouflaging material.

### 2) Description of the Prior Art:

A variety of materials and articles have heretofore been colored in black with black pigments such as carbon black. However, these black-colored materials and articles are liable to absorb heat, namely, infrared ray and hence involve a problem that their temperatures tend to become extraordinarily high upon exposure to direct sunlight or the like.

When such black-colored materials and articles are employed as heat insulators, they permit release of considerable heat through radiation of infrared ray and are hence accompanied by a problem that they cannot achieve sufficient heat insulation.

It has therefore been desired to develop a black pigment which does not absorb infrared ray but reflects it back even when employed to color a material or article fully in a black color.

## SUMMARY OF THE INVENTION

The present inventors have carried out an extensive investigation with a view toward meeting the above-described demand. As a result, it has been found that azo compounds having a particular structure exhibit significantly high infrared reflective properties compared with conventional carbon black pigment and infrared reflective materials having excellent infrared reflective properties can be obtained, for example, by producing coloring agents or paints or molded resin articles with the azo compounds, leading to completion of this invention.

In one aspect of this invention, there is thus provided an azo compound represented by the following general formula (I):

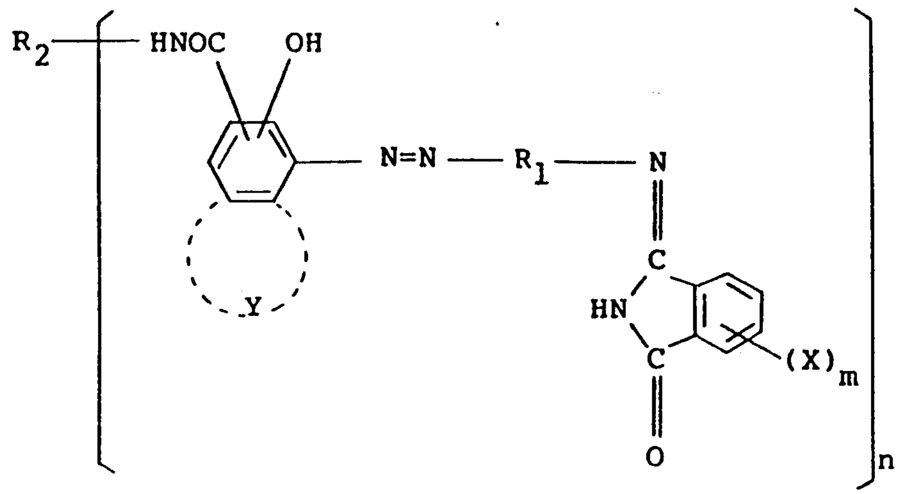

(I)

wherein X means a hydrogen or halogen atom, m stands for an integer of 1 - 4, $R_1$ denotes a substituted or unsubstituted phenylene, biphenylene or naphthylene group, n is 1 or 2, $R_2$ means a substituted or unsubstituted phenyl, biphenyl or naphthyl group when n is 1 or a substituted or unsubstituted phenylene, biphenylene or naphthylene group when n is 2, and Y is a moiety forming a benzocarbazole ring.

In another aspect of this invention, there is also provided a colored composition which comprises an azo compound represented by the above general formula (I) and a carrier medium in which said azo compound is dispersed. When the colored composition of this invention has utility as a textile printing agent, printing ink, paint or the like, it seems to be more convenient to call it "coloring composition" instead of "colored composition". Accordingly, the colored composition may hereinafter be called "colored and/or coloring composition" in some instances.

In the present invention, particularly preferable compounds are represented by the above general formula (I) in which X means a chlorine atom, m stands for 4, $R_1$ denotes a phenylene group which may optionally contain one or two chlorine atoms, methyl groups and/or methoxy groups, and Y is a moiety forming a 1,2-benzocarbazole ring which may optionally contain one or more halogen atoms as substituents, n is 1, and $R_2$ means a phenyl group which may optionally contain one or more methyl, methoxy and/or ethyl groups.

The azo compounds of this invention have dark green to black colors and have good solvent resistance, light fastness, heat resistance, waterproofness and chemical resistance. They also have strong coloring power and can hence be used successfully as azo pigments.

The azo compounds of this invention are useful in coloring various articles. The coloring compositions of this invention, which contain the azo compounds of this invention, can be used in much the same way as conventional textile printing agents, paints and printing inks and are useful for printing woven and non-woven fabrics and painting and printing various articles. They give dark green to black colors. The infrared reflectivities of these colored

articles are markedly higher compared with those colored with conventional carbon black pigment.

The above advantage can also be brought about when the colored compositions of this invention are precolored fibers or molded articles, thereby providing fibers or molded articles having similar infrared reflective properties.

By producing various articles from the use of the colored or coloring compositions of this invention, it is possible to obtain articles which in spite of their black colors, do not absorb infrared ray and do not undergo any excessive temperature increase by direct sunlight or the like. Use of these articles allow to minimize release of heat from their contents due to radiation of infrared ray.

Since the colored and coloring compositions of this invention have the same properties as green plants with respect to infrared ray, they can give camouflage, which cannot be distinguished from surrounding green plants by infrared detectors, to various military equipment, devices and facilities.

The above and other objects, features and advantages of the present invention will become apparent from the following detailed description and the appended claims, taken in conjunction with the accompanying drawings.

Preferably the azo compound is represented by the following general formula (Ia)

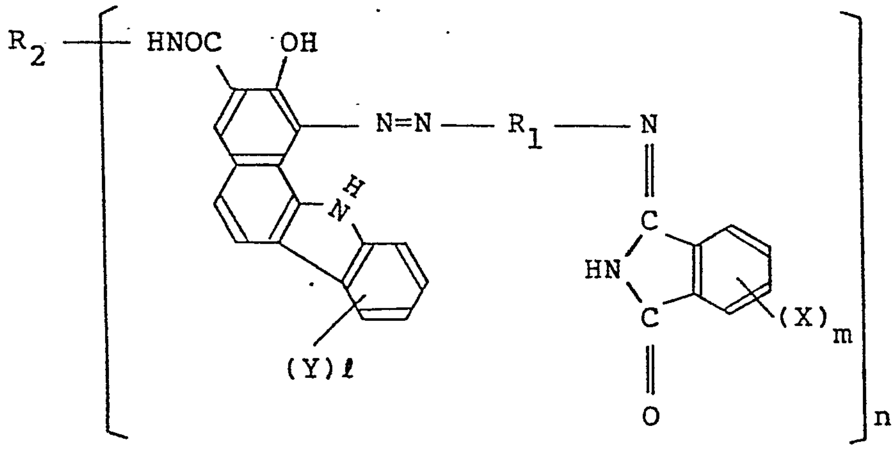

(Ia)

wherein X and Y mean individually a hydrogen or halogen atom, ℓ and m stand individually for an integer of 1 - 4, $R_1$ denotes a phenylene or biphenylene group which may contain one or more halogen atoms and/or methyl, methoxy, ethoxy and/or nitro groups, n is 1 or 2, and when n is 1, $R_2$ means a phenyl group which may contain one or more halogen atoms and/or methyl, methoxy, ethoxy, nitro, acethylamino and/or benzoylamino groups or when n is 2, a phenylene or biphenylene group which may contain one or more substituents similar to those referred to with respect to $R_2$ when n is 1.

## BRIEF DESCRIPTION OF THE DRAWINGS

FIGURE 1 shows an infrared reflectivity curve (broken line) of a material colored with carbon black and another infrared reflectivity curve (solid line) of an infrared reflective material obtained in Example 19; and

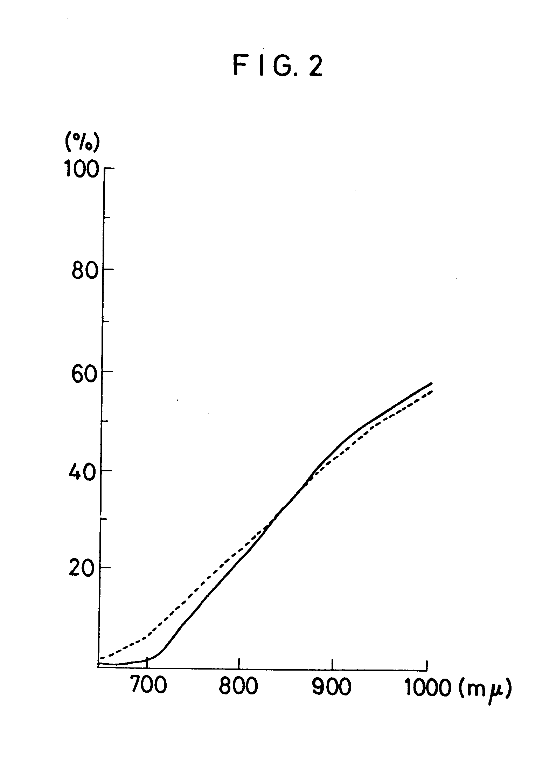

FIGURE 2 illustrates an infrared reflectivity curve (broken line) of a natural green plant and another infrared reflectivity curve (solid line) of a camouflaging material obtained in Example 19.

## DETAILED DESCRIPTION OF THE INVENTION AND PREFERRED EMBODIMENTS

The azo compounds represented by the general formula (I), which constitute the principal feature of the present invention, can be obtained respectively by coupling compounds represented by the following general formula (II) with couplers represented by the following general formula (III) in a manner known *per se* in the art.

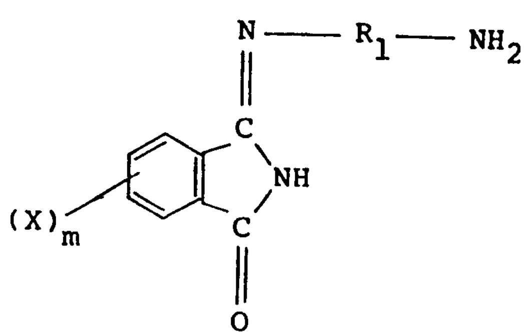

(II)

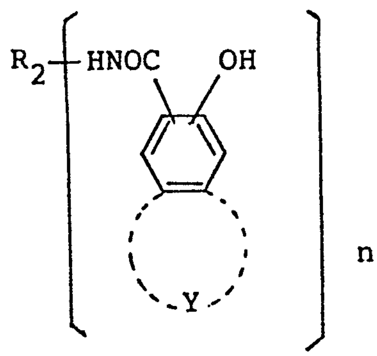 (III)

wherein $R_1$, X, m, $R_2$, Y and n have the same meaning as defined above.

The compounds represented by the general formula (II) have themselves been known to date. With reference to one example of their preparation processes, their preparation will next be described. Namely, they may each be obtained with ease by reacting 1 mole of 3-imino-1-oxoisoindoline or 3,3-dichloro-1-oxoisoindoline or a nuclear chlorination or bromination derivative thereof with about 1 mole of phenylenediamine, naphthylenediamine or diphenylenediamine which may contain one or more halogen atoms, methyl, ethyl, methoxy, ethoxy and/or nitro groups, and/or the like.

Any conventionally known diamines may be used as such diamines, including for example:

1,4-diamino-2-chlorobenzene;

1,4-diamino-2-methylbenzene;

1,4-diamino-2,5-dimethylbenzene;

1,4-diamino-2-nitrobenzene;

1,4-diamino-2-methyl-5-methoxybenzene;

1,4-diamino-2-methoxybenzene;

1,4-diamino-2,5-diethoxybenzene;

1,3-diaminobenzene;

1,3-diamino-4-methylbenzene;

1,3-diamino-4-chlorobenzene;

1,3-diamino-4-methoxybenzene;

1,3-diamino-2,4,5,6-tetrachlorobenzene;

1,4-diamino-2,3,5,6-tetrachlorobenzene;

1,2-diaminobenzene;

1,2-diamino-4-nitrobenzene;

1,3-diamino-2-methylbenzene;

1,4-diaminobenzene;

1,5-naphthylenediamine;

4,4'-diamino-2,2'-dichlorodiphenyl;

4,4'-diamino-3,3'-dichlorodiphenyl;

4,4'-diamino-3,3'-dimethyldiphenyl;

4,4'-diamino-3,3'-dimethoxydiphenyl;

4,4'-diamino-2-nitrodiphenyl;

4,4'-diamino-3-methyldiphenyl;

4,4'-diamino-3,3'-diethoxydiphenyl;

4,4'-diamino-3,3'-dimethyl-6,6'-dinitrodiphenyl;

4,4'-diamino-2,2'-dichloro-5,5'-dimethoxydiphenyl;

4,4'-diamino-2,2',5,5'-tetrachlorodiphenyl;

4,4'-diamino-3,3',5,5'-tetramethyldiphenyl;

4,4'-diaminooctachlorodiphenyl; and

4,4'-diaminodiphenyl.

As a process for diazotizing the aromatic amines represented by the general formula (II), any one of conventional diazotization processes for aromatic amines may be used as it is. For example, a solution of sodium nitrite is added to a chilled aqueous solution of a mineral acid salt of an aromatic amine represented by the general formula (II). The reaction mixture is then stirred with cooling for a certain period of time so as to diazotize the aromatic amine, thereby obtaining the resultant diazonium salt as an aqueous solution. Alternatively, the diazotization may also be carried out by any one of the processes disclosed respectively in Japanese Patent Publication Nos. 18383/1970, 37189/1971 and 2102/1981 and Japanese Patent Laid-Open No. 120923/1974.

As the couplers (III) useful in the practice of the present invention, conventionally known couplers may be employed. Exemplary couplers represented by the general formula (III) may include 2-hydroxy-1',2'-benzocarbazole-3-carboxylic acid, 2-hydroxy-2',3'-benzocarbazole-3-carboxylic acid and 2-hydroxy-3',4'-benzocarbazole-3-carboxylic acid; and those obtained by reacting their halogen-substituted derivatives or functional derivatives thereof with aromatic monoamines at a molar ratio of about 1:1 (n = 1) or with aromatic diamines at a molar ratio of about 2:1 (n = 2).

Useful aromatic monoamines may be aniline and besides, aniline derivatives containing one or more halogen atoms, methyl, methoxy, ethoxy, nitro and/or acetylamino groups, and/or the like. As illustrative aromatic monoamines, may be mentioned:

o,m,p-chloroanilines;

o,m,p-methylanilines;

o,m,p-methoxyanilines;

o,m,p-ethoxyanilines;

o,m,p-nitroanilines;

o,m,p-acetylaminoanilines;

2-methyl-4-chloroaniline;

2-methyl-5-chloroaniline;

2,4-xylidine;

2-methoxy-5-chloroaniline;

2-methoxy-5-bromoaniline;

2-methyl-4-methoxyaniline;

2,5-dimethoxy-5-chloroaniline;

2,5-dimethoxy-4-chloroaniline;

2,5-dimethoxy-4-benzoylaminoaniline; and

aniline derivatives of the following formula:

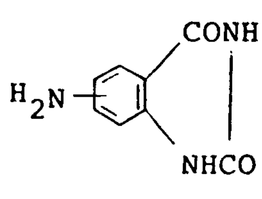

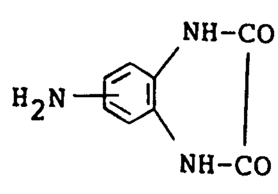

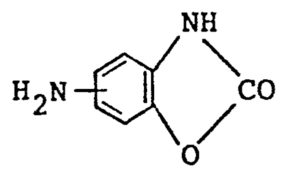

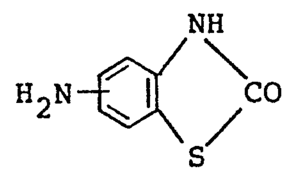

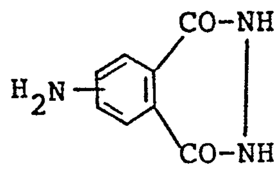

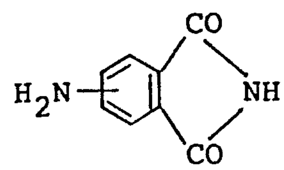

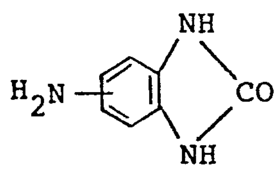

As aromatic diamines, those described above may also be used. Such couplers as mentioned above are all compounds known <u>per se</u> in the present field of art.

The azo compounds of this invention can be obtained by coupling the diazonium salts of the aromatic amines represented by the general formula (II) with the couplers represented by the general formula (III) in accordance with a conventionally-practised preparation process of azo compounds.

Namely, desired one of the above-described couplers is added to an aqueous solution of an alkali. The resultant mixture is then heated to dissolve the coupler. The thus-prepared solution is then cooled to a temperature near 25°C, followed by an addition of a buffer to adjust its pH. Thereafter, an aqueous solution of the diazonium salt of desired one of the aromatic amines represented by the general formula (II)

is added dropwise to the pH-adjusted mixture, so that a coupling reaction is allowed to proceed at room temperature under alkaline conditions to prepare a crude azo compound. The crude azo compound is collected by filtration, washed with water, and then dried, thereby obtaining the intended azo compound. In the present invention, the coupling reaction may also be effected in an organic solvent.

The azo compounds of this invention, which have been prepared in the above-described manner, have dark green to black colors and have good solvent resistance, light fastness, heat resistance, waterproofness and chemical resistance. They also have strong coloring power and can hence be used successfully as azo pigments.

The colored or coloring compositions of this invention are individually composed of one or more of the above-described azo compounds and a carrier medium.

The term "carrier medium" as used herein means a binder resin employed conventionally in textile printing agents, printing inks, paints and the like or a liquid medium containing the binder resin. When a synthetic resin, for example, acetylcellulose, vinylon, a polyester, a polyamide, polypropylene or the like is subjected to mass pigmentation with one of the above-described azo compounds, the term "carrier medium" as used herein should be construed to embrace such a synthetic resin therein. When colored films, sheets and various other colored and molded articles are obtained by coloring, with the above-described azo compounds, the above-mentioned synthetic resins and other thermoplastic or thermosetting resins such as polyethylene, polystyrene, polyvinyl chloride, polyvinylidene chloride, polyamides, acrylic resins, unsaturated polyesters, polyurethanes, polycarbonates, polyimides, melamine-alkyd resins, acrylic-urethane resins, chlorinated rubber, polysilicone resins, phenol resins, urea resins and melamine resins, these thermoplastic and thermosetting, synthetic resins are also included under the term "carrier medium" as used herein.

Accordingly, certain examples of the coloring compositions of this invention are equivalent to conventional liquid coloring compositions such as textile printing agents, printing inks, paints and the like except that the azo compounds of the general formula (I) are employed instead of conventional pigments in such conventional liquid coloring compositions. In each of these exemplary coloring compositions, it is general to use desired one of the azo compounds of the general formula (I) in an amount

of about 0.1 - 50 parts by weight. In addition, a binder resin may generally be employed in an amount of 1 - 30 parts by weight while a liquid medium, which may be water and/or an organic solvent, may be incorporated in an amount of 10 - 95 parts by weight.

In colored synthetic fibers or colored and molded resin articles which are other examples of the colored compositions of this invention, the azo compounds of the general formula (I) may each be added to the fibers or articles, generally, in an amount sufficient to color them substantially, for example, to a concentration of 0.1 - 30 wt.%.

The coloring or colored compositions of this invention, such as those described above, may be obtained in the same manner as conventionally-known preparation processes of textile printing agents, paints and printing inks, or mass pigmentation processes or coloring and molding processes of synthetic resins, depending whether the coloring or colored compositions are such liquid materials as described above or such colored fibers or colored and molded resin articles as mentioned above.

The present invention will hereinafter be described more specifically by the following Examples, in which all designations of "part" or "parts" and "%"

mean part or parts by weight and wt.% unless otherwise specifically indicated.

Example 1:

Suspended in 11.3 parts of glacial acetic acid were 3.75 parts of 3-(4'-aminophenylimino)-1-oxo-4,5,6,7-tetrachloroisoindoline, followed by an addition of 3.7 parts of concentrated hydrochloric acid. The resultant mixture was then stirred. Then, 2.6 parts of water was added to the mixture and the resultant mixture was maintained at temperatures of 0 - 5°C, to which 2.0 parts of a 40% aqueous solution of sodium nitrite were added. At the same temperature, the reaction mixture was stirred for about 30 minutes to obtain a yellow solution of a diazonium salt. Thereafter, 4.8 parts of sodium acetate trihydrate were added to the yellow solution to prepare a diazonium salt solution.

On the side, 3.82 parts of 2-hydroxy-N-(4'-methoxyphenyl)-11-H-benzo[a]-carbazole-4-carboxyamide were suspended in 250 parts of o-dichlorobenzene. At 20 - 30°C, the above-prepared diazonium salt solution was added to the suspension and while maintaining the resultant mixture at 30 - 40°C, 20 parts of glacial acetic acid were added further. The resultant reaction mixture was then maintained at the same temperature for 5 - 6 hours to effect coupling, whereby an azo compound

of this invention was obtained. The azo compound had a black color and its decomposition point was 373°C.

Example 2:

Suspended in 300 parts of o-dichlorobenzene were 3.7 parts of a diazo compound, which had been produced by reacting diazotized 3-(3'-aminophenylimino)-1-oxo-4,5,6,7-tetrachloroisoindoline with piperidine in an alkaline medium, and 6.3 parts of 1,4-bis-[2'-hydroxy-11'-H-benzo[a]-carbazole-3'-carbonylamino]benzene, followed by an addition of 20 parts of glacial acetic acid which had been heated to 70 - 75°C. Upon stirring the resultant mixture at 120 - 130°C for 2 hours, coupling was allowed to proceed so that an azo compound of this invention was obtained. The azo compound had a slightly-reddish black color and its decomposition point was 342°C.

Examples 3 - 18:

In the same manner as in Example 1 or Example 2, azo compounds of this invention were obtained by using the following compounds of the general formulae (II) and (III).

Example 3:

Compound of the general formula (II):

3-(4'-Aminophenylimino)-1-oxo-4,5,6,7-tetrachloroisoindoline.

Compound of the general formula (III):

2-Hydroxy-N-(2'-methyl-4'-methoxyphenyl)-11-H-benzo[a]-carbazole-3-carboxyamide.

Color tone:

Slightly-reddish black.

Decomposition point:

359°C.

Example 4:

Compound of the general formula (II):

3-(2',5'-Dichloro-4'-aminophenylimino)-1-oxo-4,5,6,7-tetrachloroisoindoline.

Compound of the general formula (III):

2-Hydroxy-N-(2'-methyl-4'-methoxyphenyl)-11-H-benzo[a]-carbazole-3-carboxyamide.

Color tone:

Black.

Decomposition point:

341°C.

Example 5:

Compound of the general formula (II):

3-(2',5'-Dimethyl-4'-aminophenylimino)-1-oxo-4,5,6,7-tetrachloroisoindoline.

Compound of the general formula (III):

2-Hydroxy-N-(2'-ethylphenyl)-11-H-benzo[a]-carbazole-3-carboxyamide.

Color tone:

Slightly-reddish black.

Decomposition point:

346°C.

Example 6:

Compound of the general formula (II):

3-(2'-Methyl-5'-chloro-4'-aminophenylimino)-1-oxo-4,5,6,7-tetrachloroisoindoline.

Compound of the general formula (III):

2-Hydroxy-9-chloro-N-(4'-methoxyphenyl)-11-H-benzo[a]-carbazole-3-carboxyamide.

Color tone:

Black.

Decomposition point:

369°C.

Example 7:

Compound of the general formula (II):

3-(3',3"-Dimethyl-4"-aminobiphenyl-4-ylimino)-1-oxo-4,5,6,7-tetrachloro-isoindoline.

Compound of the general formula (III):

2-Hydroxy-N-(3'-methylphenyl)-11-H-benzo[a]-carbazole-3-carboxyamide.

Color tone:

Black.

Decomposition point:

347°C.

Example 8:

Compound of the general formula (II):

3-(3',3"-Dichloro-4"-aminobiphenyl-4-ylimino)-1-oxo-4,5,6,7-tetrachloro-isoindoline.

Compound of the general formula (III):

1,4-Bis[2'-hydroxy-11'-H-benzo[a]-carbazole-3'-carbonylamino]benzene.

Color tone:

Black.

Decomposition point:

342°C.

Example 9:

Compound of the general formula (II):

3-(3'-Aminophenylimino)-1-oxo-4,5,6,7-tetrachloroisoindoline.

Compound of the general formula (III):

2-Hydroxy-N-(4'-methoxylphenyl)-11-H-benzo[a]-carbazole-3-carboxyamide.

Color tone:

Black.

Decomposition point:

335°C.

Example 10:

Compound of the general formula (II):

3-(5'-Chloro-3'-aminophenylimino)-1-oxo-4,5,6,7-tetrachloroisoindoline.

Compound of the general formula (III):

2-Hydroxy-N-(2'-methyl-4'-methoxyphenyl)-11-H-benzo[a]-carbazole-3-carboxyamide.

Color tone:

Slightly-bluish black.

Decomposition point:

345°C.

Example 11:

Compound of the general formula (II):

3-(4'-Aminophenylimino)-1-oxo-4,7-dichloroisoindoline.

Compound of the general formula (III):

2-Hydroxy-N-(2'-ethylphenyl)-11-H-benzo[a]-carbazole-3-carboxyamide.

Color tone:

Slightly-reddish black.

Decomposition point:

375°C.

Example 12:

Compound of the general formula (II):

3-(2',5'-Dimethoxy-4'-aminophenylimino)-1-oxo-4,5,6,7-tetrachloroisoindoline.

Compound of the general formula (III):

2-Hydroxy-N-(1',3'-dioxo-2'-H-isoindolin-5'-yl)-11-H-benzo[a]-carbazole-3-carboxyamide.

Color tone:

Slightly-reddish black.

Decomposition point:

372°C.

Example 13:

Compound of the general formula (II):

3-(4'-Aminophenylimino)-1-oxo-4,5,6,7-tetrachloroisoindoline.

Compound of the general formula (III):

2-Hydroxy-N-(1'-H,3'-H-benzimidazolin-2'-one-5'-yl)-11-H-benzo[a]-carbazole-3-carboxyamide.

Color tone:

Black.

Decomposition point:

379°C.

Example 14:

Compound of the general formula (II):

3-(3'-Nitro-4'-aminophenylimino)-1-oxo-4,5,6,7-tetrachloroisoindoline.

Compound of the general formula (III):

2-Hydroxy-N-[2'-methoxy-3'-(2"-methyl-anilinocarboxy)-phenyl]-11-H-benzo[a]-carbazole-3-carboxyamide.

Color tone:

Greenish black.

Decomposition point:

347°C.

Example 15:

Compound of the general formula (II):

3-(3',3"-Dimethoxy-4"-aminobiphenylimino)-1-oxo-4,5,6,7-tetrachloroisoindoline.

Compound of the general formula (III):

2-Hydroxy-N-(1'-H,3'-H-benzimidazolin-2'-one-5'-yl)-11-H-benzo[a]-carbazole-3-carboxyamide.

Color tone:

Black.

Decomposition point:

365°C.

Example 16:

Compound of the general formula (II):

3-(2',5'-Dimethoxy-4'-aminophenylimino)-1-oxo-4,5,6,7-tetrachloroisoindoline.

Compound of the general formula (III):

1,3-Bis[2'-hydroxy-11'-H-benzo[a]-carbazole-3'-carbonylamino]benzene

Color tone:

Slightly-bluish black.

Decomposition point:

342°C.

Example 17:

Compound of the general formula (II):

3-(4'-Aminophenylimino)-1-oxo-4,5,6,7-tetrachloroisoindoline.

Compound of the general formula (III):

1,5-Bis[2'-hydroxy-11'-H-benzo[a]-carbazole-3'-carbonylamino]naphthalene

Color tone:

Black.

Decomposition point:

389°C.

Example 18:

Compound of the general formula (II):

3-(5'-Aminonaphthylimino)-1-oxo-4,5,6,7-tetrachloroisoindoline.

Compound of the general formula (III):

2-Hydroxy-N-(4'-methoxyphenyl)-11-H-benzo[a]-carbazole-3-carboxyamide

Color tone:

Black.

Decomposition point:

362°C.

Example 19:

| | Parts |
|---|---|
| Acrylic ester emulsion (surfactant free type; 40% solids) | 30 |
| Azo compound obtained in Example 1 | 35 |
| Defoaming agent | 0.5 |
| Dispersant | 1 |
| "Daimonex EH-6" (trade mark; product of Dainichiseika Colour & Chemicals Mfg., Co., Ltd.) | 3 |
| Terpene | 15 |
| Methanol | 8 |
| Water | 15.5 |
| TOTAL | 100 |

A black paste having the above formulation and containing the azo compound dispersed therein was printed, along with 1% of an ethyleneimine-type crosslinking agent, on an "Entrant" fabric (trade mark; product of Toray Industries, Inc.) by a silk screen printing technique. The thus-printed fabric was cured at 120°C for 15 minutes to obtain a fabric printed in a black color. The infrared reflectivity of a printed area of the printed fabric was measured. As shown in FIGURE 1, the reflectivity was significantly higher than the infrared reflectivity of the same material printed by carbon black pigment. The printed fabric showed an infrared reflectivity similar to that of green plants.

Example 20:

| | Parts |
|---|---|
| Azo compound obtained in Example 2 | 17 |
| Thermoplastic acrylic resin | 70 |
| Toluol | 6.8 |
| Xylol | 3.2 |
| Butanol | 2.2 |
| Cellosolve | 0.8 |
| TOTAL | 100 |

The above composition was subjected to a dispersion treatment in a ball mill to obtain a black paint. The paint was coated on a steel panel to form a coating film thereon. A measurement of the infrared reflectivity of the coating film gave results similar to those obtained in Example 19.

Example 21:

| | Parts |
|---|---|
| Flushed color of the azo compound obtained in Example 3 (purity: 30%) | 38.0 |
| Formulated varnish for offset lithoprinting ink | 60.0 |
| 5% Cobalt drier | 0.2 |
| 8% Manganese drier | 1.0 |
| Ink solvent | 0.8 |
| TOTAL | 100 |

The above components were thoroughly mixed and kneaded to obtain an offset printing ink. A sheet of

high-quality paper was printed solid with the above ink and its infrared reflectivity was measured. The measurement gave results similar to those obtained in Example 19.

Example 22:

A kneaded mixture of 0.5 part of the azo compound obtained in Example 4 and 1.0 part of "Pansolve H" was mixed with 50 parts of a polyvinyl chloride resin compound. The resultant mass was roll-milled at 155 - 160°C for 3 minutes through 6-inch rolls to form a sheet. The sheet was then press-formed at 160°C under a pressure of 50 $kg/cm^2$ into a thickness of 5 mm, thereby obtaining a sheet colored in a blackish green color. A measurement of the infrared reflectivity of the sheet gave results similar to those obtained in Example 19.

Example 23:

Ten parts of the azo compound obtained in Example 5, 1 part of a dispersant and 89 parts of ethylene glycol were ground in a ball mill. Fifteen parts of the resultant ground mixture were added to 100 parts of an ester interchange reaction product which had been obtained from 1 mole of dimethyl terephthalate and 2 moles of ethylene glycol. The resultant mixture was heated and polymerized under reduced pressure at about 280°C for 4 hours, thereby obtaining a black

polyester colored uniformly and beautifully. The infrared reflectivity of a woven fabric made of black fibers, which had been obtained by spinning the precolored polyester in a usual manner, was measured. Measurement results were similar to those obtained in Example 19.

Example 24:

| | Parts |
|---|---|
| Pigment obtained in Example 6 | 12 |
| "Hitalloid #3088" (trade name; product of Hitachi Chemical Co., Ltd.) | 24 |
| Toluene | 5 |
| Xylene | 5 |
| Isobutyl acetate | 5 |
| Glass beads | 120 |
| TOTAL | 171 |

After treating the above components for 10 minutes in a paint shaker, 40.1 parts of "Hitalloid-70B" (trade name; product of Hitachi Chemical Co., Ltd.) and 45 parts of a thinner were added. After mixing them for further 10 minutes in the paint shaker, the glass beads were removed to prepare an acrylic-urethane paint. The paint was then coated on a plywood to form a coating film. A measurement of the infrared reflectivity of the coating film gave results similar to those obtained in Example 19.

Products colored respectively with the azo compounds, which were obtained in Examples 7 - 18 respectively, in the same manner as in Examples 19 - 24 exhibited excellent infrared reflectivities.

Having now fully described the invention, it will be apparent to one of ordinary skill in the art that many modifications and changes can be made thereto without departing from the spirit or scope of the invention as set forth herein.

CLAIMS:

1. An azo compound represented by the following general formula (I):

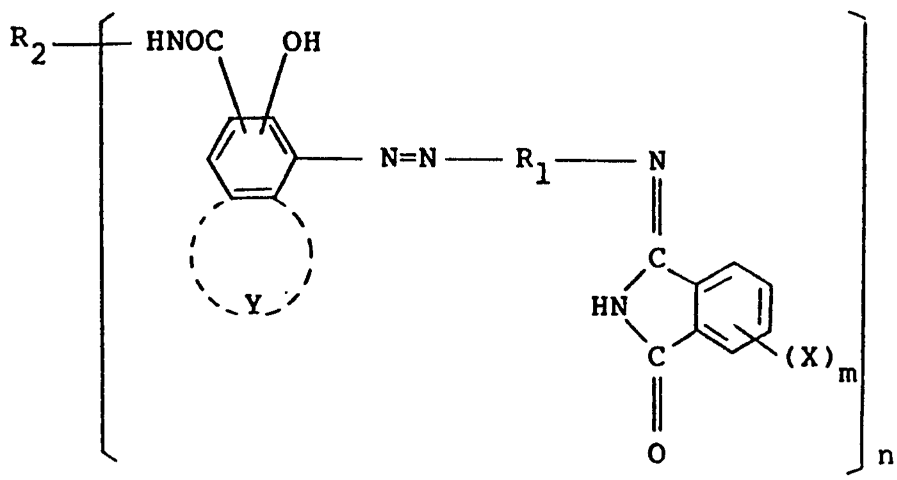

(I)

wherein X means a hydrogen or halogen atom, m stands for an integer of 1 - 4, $R_1$ denotes a substituted or unsubstituted phenylene, biphenylene or naphthylene group, n is 1 or 2, $R_2$ means a substituted or unsubstituted phenyl, biphenyl or naphthyl group when n is 1 or a substituted or unsubstituted phenylene, biphenylene or naphthylene group when n is 2, and Y is a moiety forming a benzocarbazole ring.

2. The azo compound as claimed in Claim 1, wherein X means a chlorine atom, m stands for 4, and Y is a moiety forming a 1,2-benzocarbazole ring.

3. The azo compound as claimed in Claim 1, wherein n is 1.

4. The azo compound as claimed in Claim 1, wherein n is 2.

5. A colored composition comprising an azo compound represented by the following general formula (I) and a carrier medium in which said azo compound is dispersed:

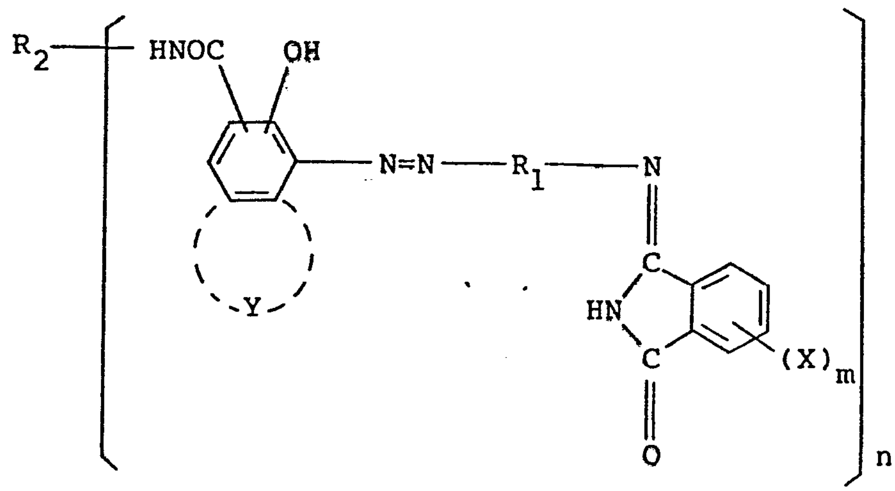

(I)

wherein X means a hydrogen or halogen atom, m stands for an integer of 1 - 4, $R_1$ denotes a substituted or unsubstituted phenylene, biphenylene or naphthylene group, n is 1 or 2, $R_2$ means a substituted or unsubstituted phenyl, biphenyl or naphthyl group when n is 1 or a substituted or unsubstituted phenylene, biphenylene or naphthylene group when n is 2, and Y is a moiety forming a benzocarbazole ring.

6. The colored composition as claimed in Claim 5, wherein X means a chlorine atom, m stands for 4, and Y is a moiety forming a 1,2-benzocarbazole ring.

7. The colored composition as claimed in Claim 5, wherein the carrier medium is a liquid medium containing a binder resin.

8. The colored composition as claimed in Claim 5, wherein the carrier medium is a natural or synthetic high molecular material.

9. The colored composition as claimed in Claim 5, wherein the colored composition is used as an infrared reflective material.

10. The colored composition as claimed in Claim 5, wherein the colored composition is used as a camouflaging material.

FIG. 1

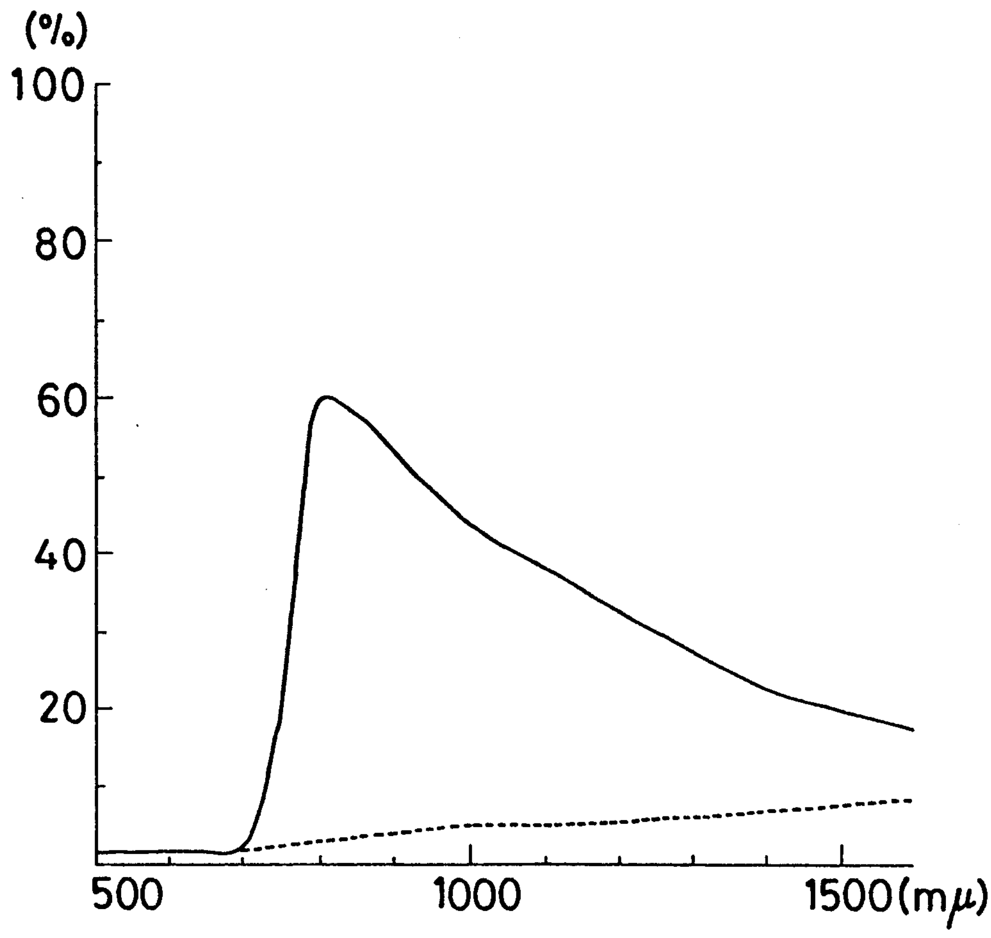

FIG. 2